# EUROPÄISCHE PATENTSCHRIFT

(11) **EP 1 747 956 B1**
(45) Veröffentlichungstag und Bekanntmachung des Hinweises auf die Patenterteilung: **08.09.2010**
(21) Anmeldenummer: 06015463.0
(22) Anmeldetag: 25.07.2006
(51) Int. Cl.: B60S 9/08, B66F 3/08

(54) **Spindelstützeinrichtung**
Screw-jack type support device
Support du type cric à vis

(30) Priorität: 26.07.2005 DE 102005035512
(43) Veröffentlichungstag der Anmeldung: 31.01.2007
(73) Patentinhaber: Haacon Hebetechnik GmbH, 97896 Freudenberg/Main (DE)
(72) Erfinder: Böxler, Armin, 97896 Freudenberg (DE); Grän, Michael, 97896 Freudenberg (DE); Natterer, Ralf, 63853 Mömlingen (DE)
(74) Vertreter: Tappe, Hartmut

(56) Entgegenhaltungen:
- DE-U1- 20 103 535
- GB-A- 2 254 302
- JP-A- 9 071 226
- US-A- 5 423 518

## Beschreibung

Die Erfindung betrifft eine Spindelstützeinrichtung, insbesondere Sattelstütze oder dergleichen, mit einem Rohrverbund aus einem Schaftrohr und einem gegenüber dem Schaftrohr mittels eines Hubgetriebes verfahrbaren und im Schaftrohr zumindest teilweise aufgenommenen Stützrohr, wobei das Schaftrohr mit einer Montageeinrichtung zur mittelbaren oder unmittelbaren Befestigung an einem anzuhebenden Gegenstand, insbesondere einem Fahrzeugchassis, versehen ist. Eine solche Spindelstützeinrichtung ist Beispielsweise aus der GB 2 254 302 A bekannt.

Spindelstützeinrichtungen werden vielfach als Stützeinrichtungen zur Abstützung von Sattelaufliegern verwendet, damit das Zugfahrzeug entfernt und der Sattelauflieger unabhängig vom Zugfahrzeug an einem Lagerort in statisch definierter Abstützung sicher gelagert werden kann: Neben dieser allgemeinen Verwendung der Spindelstützeinrichtungen werden diese auch als sogenannte "Heckabstützungen" an Sattelaufliegern von Silofahrzeugen verwendet. Auf diesen Aufliegern befindet sich ein vermittels einer im Bereich des Aufliegersattels angeordneten ausfahrbaren Hubeinrichtung um eine Schwenkachse verschwenkbarer Silobehälter, wobei die Schwenkachse im Bereich des Fahrzeughecks angeordnet ist. Infolge der Schwenkbewegung verlagert sich zunehmend das Gewicht des Silobehälters in den Heckbereich des Aufliegers, der daher in besonderer Weise abgestützt werden muss, um eine zu große Entlastung des Aufliegersattels zu verhindern. Da die vorgenannten Heckabstützungen besonders hohen Belastungen ausgesetzt sind, sind für diese Heckabstützungen zumindest einmal jährlich Überprüfungen der tragenden Teile, insbesondere der Spindel und der Spindelmutter, der Spindelstützeinrichtungen vorgeschrieben.

Bislang ist es zur Durchführung der Überprüfung notwendig, die fest am Heck des Sattelaufliegers bzw. an dessen Chassis montierten Stützeinrichtungen vom Chassis zu entfernen und eine aufwendige Demontage des Stützrohres vom Schaftrohr oder zumindest des am oberen Ende des Schaftrohres montierten, auf die Spindelmutter wirkenden Hubgetriebes durchzuführen, um die vorgeschriebene Sichtprüfung an den belasteten Teilen, die überwiegend in einer Korrosionsprüfung besteht, durchzuführen.

Die Demontage des Stützrohrs vom Schaftrohr wird insbesondere dadurch erschwert, dass die Spindelmutter, wenn sie mit dem Stützrohr nach unten aus dem Schaftrohr ausgefahren wird, bei den bekannten Spindelstützeinrichtungen an einem unteren Anschlag an der Spindel anschlägt, welcher das Verlieren von Mutter und Stützrohr verhindern soll. Um Schaftrohr und Stützrohr voneinander zu trennen, ist in der Regel die komplette Demontage des Hubgetriebes notwendig.

Der vorliegenden Erfindung liegt die Aufgabe zugrunde, eine Spindelstützeinrichtung so zu gestalten, dass die Überprüfung der Spindelmutter sowie der Spindel ohne Demontage des Hubgetriebes sowie insbesondere ohne die vorhergehende Entfernung der Spindelstützeinrichtung vom Chassis möglich ist.

Diese Aufgabe wird durch eine Spindelstützeinrichtung mit den Merkmalen des Anspruchs 1 gelöst.

Die erfindungsgemäße Spindelstützeinrichtung weist einen Rohrverbund aus einem Schaftrohr und einem gegenüber dem Schaftrohr mittels eines Hubgetriebes verfahrbaren und im Schaftrohr zumindest teilweise aufgenommenen Stützrohr auf, wobei das Schaftrohr mit einer Montageeinrichtung zur mittelbaren oder unmittelbaren Befestigung an einem anzuhebenden Gegenstand, insbesondere einem Fahrzeugchassis, versehen ist und eine das Stützrohr mit dem Schaftrohr verbindende Demontagevorrichtung mit einer außerhalb des Rohrverbundes angeordneten lösbaren Anschlageinrichtung den Spindelhub begrenzt.

Das Stützrohr kann so aus dem Schaftrohr vollständig ausgefahren werden, ohne dass ein Anschlagelement den Maximalhub begrenzt. Die voneinander getrennten Rohre ermöglichen eine Sichtprüfung der Spindelmutter und des im Betrieb belasteten unteren Bereichs der Spindel, welcher durch das nach unten hin offene Schaftrohr einsehbar ist. Eine Demontage weiterer Bauteile ist nicht notwendig.

Gemäß der Erfindung ist die Demontagevorrichtung als eine zwischen dem Schaftrohr und dem Stützrohr wirkende, bei Anschlag auf Zug beanspruchte Rückhalteeinrichtung ausgebildet, so dass ein Herausfallen des Stützrohres aus dem Schaftrohr verhindert wird und so auf eine den Hub begrenzende Anschlageinrichtung am unteren Ende einer Spindel verzichtet werden kann.

Als besonders vorteilhaft erweist es sich, wenn die Rückhalteeinrichtung eine Rückhaltestange aufweist, die mit einem unteren Ende am Stützrohr befestigt ist und mit ihrem laufenden Ende durch einen Führungsanschlag am Schaftrohr geführt ist. Der Führungsanschlag und eine am laufenden Ende der Rückhaltestange angeordnete Anschlageinrichtung definieren somit zusammen einen Anschlag der Rückhalteeinrichtung. Einerseits ist so während eines Ausfahrvorgangs des Stützrohrs aus dem Schaftrohr eine sichere Positionierung der Rückhalteeinrichtung gewährleistet, und andererseits wird ein einen Maximalhub begrenzender Anschlag zwischen dem Anschlagelement der Rückhaltestange und der Führungseinrichtung gebildet.

Eine besonders einfache Demontage der Spindelstützeinrichtung wird möglich, wenn die Anschlageinrichtung am laufenden Ende der Rückhaltestange demontierbar ist. Die Anschlageinrichtung kann in einfacher Weise am Ende der Rückhaltestange ausgebildet sein, wie z. B. als Mutter auf einem Gewinde der Rückhaltestange, Sicherungsring, Sicherungsstift usw., und kann somit leicht von der Rückhaltestange entfernt werden, was wiederum eine einfache Demontage von Stützrohr und Schaftrohr ermöglicht.

Eine Ausführungsform der Erfindung wird nachfolgend anhand der Zeichnung näher erläutert.

Es zeigen:
- **Fig. 1**: eine Spindelstützeinrichtung in Seitenansicht und teilweiser Schnittdarstellung;
- **Fig. 2**: die in **Fig. 1** dargestellte Spindelstützeinrichtung in einer Ansicht gemäß dem Pfeil A in **Fig. 1****.**

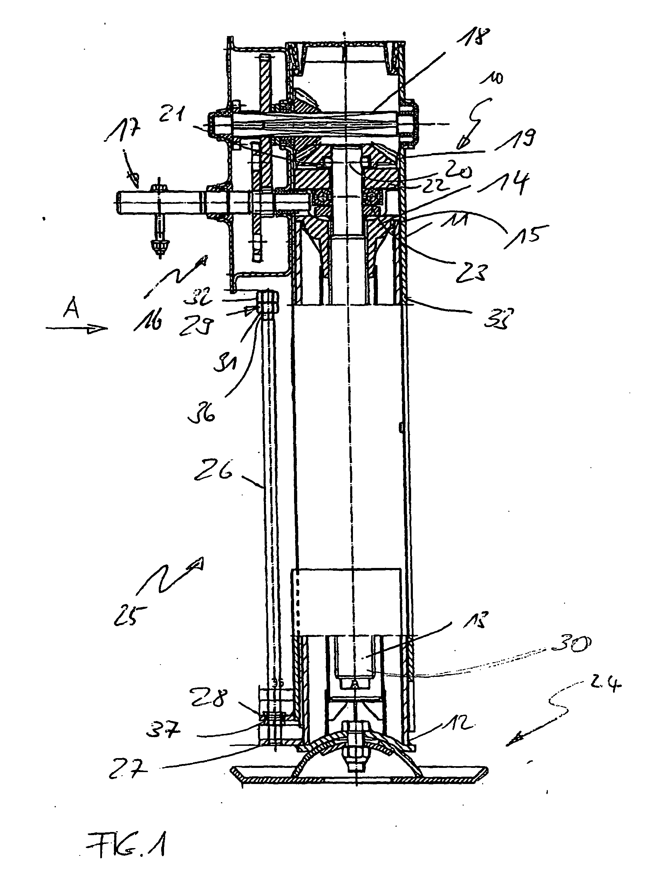

**Fig. 1** zeigt eine Spindelstütze 10 mit einem Schaftrohr 11 und einem gegenüber dem Schaftrohr 11 verfahrbaren Stützrohr 12. Im Stützrohr 12 ist eine Spindel 13 angeordnet, die mit einer Spindelmutter 14 zusammenwirkt. Die Spindelmutter 14 ist mit einem Oberrand des Stützrohrs 12 verbunden bzw. stützt sich mit ihrem Stützrand 15 auf dem Oberrand des Stützrohrs 12 ab. Am oberen Ende des Schaftrohrs 11 befindet sich außenseitig an diesem angeordnet ein Hubgetriebe 16, das über eine Antriebswelle 17 und eine Abtriebswelle 18 auf ein Kegelradgetriebe wirkt, dessen Abtriebsrad 19 drehstarr mit einem oberen Spindelende 20 verbunden ist. Zur drehstarren Verbindung des Abtriebrads 19 mit einem oberen Spindelende 20 ist im vorliegenden Fall eine Spannhülse 21 vorgesehen. Unterhalb des Abtriebsrads 19 befindet sich eine fest mit dem Schaftrohr 11 verbundene Druckplatte 22, an der sich ein Axiallager 23 abstützt, über das die in Längsrichtung der Spindel 13 bei einer Abstützung eines mit dem unteren Ende des Stützrohrs 12 verbundenen Stützfußes 24 am Untergrund wirkende Stützkraft auf die Druckplatte 22 wirkt.

Außen am Schaftrohr 11 angeordnet befindet sich eine Demontagevorrichtung 25, die in der in **Fig. 1** dargestellten Konfiguration als Endanschlageinrichtung bei einer Ausfahrbewegung des Stützrohrs 12 aus dem Schaftrohr 11 wirkt. Hierzu umfasst die Demontagevorrichtung 25 eine hier als Rückhaltestange 26 ausgebildete Rückhalteeinrichtung, die mit ihrem unteren Ende mit einem außen am Stützrohr 12 angeordneten Befestigungsfortsatz 27 verbunden ist. Wegen der Ausbildung der Rückhalteeinrichtung als Rückhaltestange 26 ist fluchtend mit dem Befestigungsfortsatz 27 außen am Schaftrohr 11 ein als Führungsanschlag 28 ausgebildeter Fortsatz angeordnet, der eine Durchgangsöffnung 37 zur Durchführung der Rückhaltestange 26 aufweist. Am oberen Ende der Rückhaltestange 26 ist eine lösbare Anschlageinrichtung 29 ausgebildet, die mit dem Führungsanschlag 28 bei Erreichen des maximalen Ausfahrhubs des Stützrohrs 12 zusammenwirkt. Dabei sind der Befestigungsfortsatz 27, der Führungsanschlag 28 sowie die Position der Anschlageinrichtung 29 an der Rückhaltestange 26 so gewählt, dass ein Endanschlag des Ausfahrhubs durch Anschlag der Anschlageinrichtung 29 an den Führungsanschlag 28 sich so einstellt, dass die Spindelmutter 14 gerade noch mit vollständiger Gewindeüberdeckung auf einem unteren Spindelende 30 verbleibt.

Um das Stützrohr 12 vollständig aus dem Eingriff mit dem Schaftrohr 11 entfernen zu können und somit das Stützrohr 12 unabhängig vom Schaftrohr 11 handhaben zu können, ist die Anschlageinrichtung 29 lösbar mit dem oberen Ende der Rückhaltestange 26 verbunden. Im vorliegenden Ausführungsbeispiel umfasst die Anschlageinrichtung 29 eine Anschlagmutter 31, die auf einem Gewindeende 36 der Rückhaltestange 26 angeordnet und durch eine Kontermutter 32 gesichert ist.

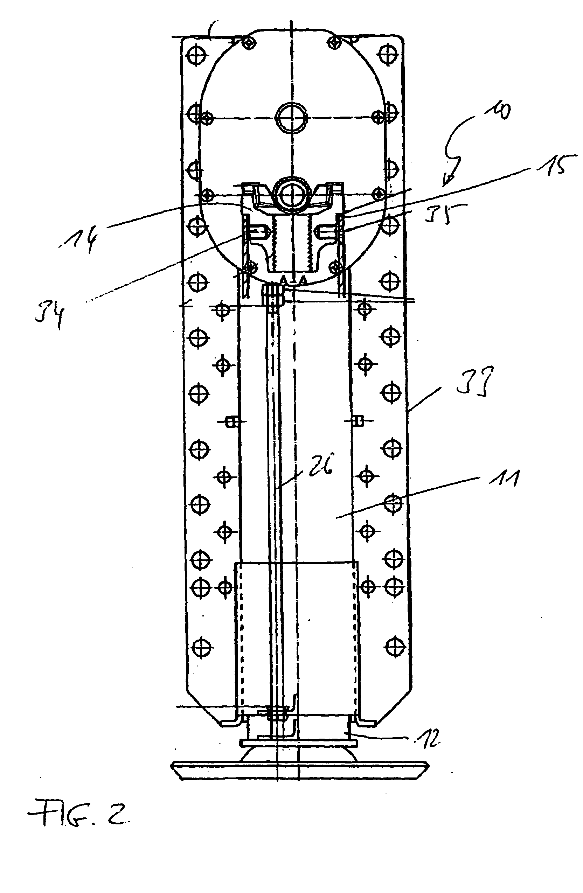

Wie aus den vorstehenden Erläuterungen deutlich wird, ermöglicht also die Demontagevorrichtung 25 ein Entfernen des Stützrohrs 12 aus dem Schaftrohr 11 unter Beibehaltung der Verbindung des Schaftrohrs 11 zum hier nicht näher dargestellten Chassis eines Sattelaufliegers über eine am Schaftrohr 11 ausgebildete Montageplatte 33, wie auch in **Fig. 2** dargestellt. Da sich die Spindelmutter 14 fest am Oberrand des Stützrohrs 12 angeordnet befindet, ist nach Entfernung des Stützrohrs 12 aus dem Schaftrohr 11 eine Prüfung, insbesondere eine Sichtprüfung, der Spindelmutter 14 durchführbar. Ebenfalls kann eine Sichtprüfung der Spindel 13 zumindest in ihrem unteren Bereich durch Einblick in das nun von unten offene Schaftrohr 11 erfolgen. Da gerade der untere Teil der Spindel 13 im Gegensatz zum oberen Teil der Spindel 13, der lediglich zur Ausführung des Leerhubs eingesetzt wird, der belastete Teil der Spindel 13 ist, kann auch hier die vorgeschriebene Prüfung in ausreichendem Umfang erfolgen.

Wie **Fig. 2** noch zeigt, ist die Spindelmutter 14 bei dem hier dargestellten Ausführungsbeispiel durch eine Verschraubung über zwei durch die Stützrohrwandung in die Spindelmutter 14 eingesetzte Sicherungsschrauben 34, 35 gehalten, die die Spindelmutter 14 auch nach Lösen des Eingriffs der Spindel 13 mit der Spindelmutter 14 am Stützrohr 12 sichern. Da die Stützlast vom Stützrand 15 der Spindelmutter 14 auf den Oberrand des Stützrohrs 12 übertragen wird, sind die Sicherungsschrauben 34, 35 frei von Betriebslasten.

## Patentansprüche

1. Spindelstützeinrichtung, insbesondere Sattelstütze oder dergleichen, mit einem Rohrverbund aus einem Schaftrohr (11) und einem gegenüber dem Schaftrohr mittels eines Hubgetriebes (16) verfahrbaren und im Schaftrohr zumindest teilweise aufgenommenen Stützrohr (12), wobei das Schaftrohr mit einer Montageeinrichtung (33) zur mittelbaren oder unmittelbaren Befestigung an einem anzuhebenden Gegenstand, insbesondere einem Fahrzeugchassis, versehen ist,
**gekennzeichnet durch** eine das Stützrohr mit dem Schaftrohr verbindenden Demontagevorrichtung (25) mit einer außerhalb des Rohrverbundes angeordneten lösbaren, den Spindelhub begrenzenden Anschlageinrichtung (29), wobei
die Demontagevorrichtung (25) als eine zwischen dem Schaftrohr (11) und dem Stützrohr (12) wirkende, bei Anschlag auf Zug beanspruchte Rückhalteeinrichtung ausgebildet ist.

2. Spindelstützeinrichtung nach Anspruch 1,
**dadurch gekennzeichnet,**
**dass** die Rückhalteeinrichtung eine Rückhaltestange (26) aufweist, die mit einem unteren Ende am Stützrohr (12) befestigt ist und mit ihrem laufenden Ende durch einen Führungsanschlag (28) am Schaftrohr (11) geführt ist, wobei der Führungsanschlag und eine am laufenden Ende der Rückhaltestange angeordnete Anschlageinrichtung (29) zusammen einen Anschlag der Rückhalteeinrichtung definieren.

3. Spindelstützeinrichtung nach Anspruch 2,
**dadurch gekennzeichnet,**
**dass** die Anschlageinrichtung (29) demontierbar ist.

## Claims

1. Spindle support device, in particular a semitrailer support or the like, with a bundle of tubes composed of a shank tube (11) and a support tube (12) which can be displaced with respect to the shank tube with the aid of a lifting gear mechanism (16) and which is at least partially received in the shank tube, wherein the shank tube is provided with an assembly device (33) for direct or indirect fastening at an object to be lifted, in particular a vehicle chassis,
**characterized by**
a disassembly device (25) connecting the support tube with the shank tube and having a detachable stop device (29) that is disposed on the outside of the bundle of tubes and that limits the lift of the spindle, wherein the disassembly device (25) is formed as a retainer device acting between the shank tube (11) and the support tube (12) and being exposed to tensile stresses when arrested by the stop.

2. Spindle support device according to claim 1,
**characterized in that**
the retainer device features a retainer rod (26) that, with its lower end, is fastened at the support tube (12) and with its moving end is guided through a guide stop (28) at the shank tube (11), wherein the guide stop and a stop device (29) disposed at the moving end of the retainer rod conjointly define a stop of the retainer device.

3. Spindle support device according to claim 2,
**characterized in that**
the stop device (29) can be disassembled.

## Revendications

1. Dispositif de support pour une broche, notamment un support de remorque ou similaire, comprenant un faisceau de tubes composé d'un tube de tige (11) et d'un tube de support (12) déplaçable par rapport au tube de tige à l'aide d'un mécanisme de levage (16) et étant monté au moins en partie dans le tube de tige, le tube de tige étant muni d'un dispositif de montage (33) pour la fixation directe ou indirecte à un objet à lever, notamment un châssis de véhicule,
**caractérisé par**
un dispositif de démontage (25) raccordant le tube de support avec le tube de tige et comportant un dispositif de butée (29) détachable, agencé à l'extérieur du faisceau de tubes et limitant la levée de la broche,
le dispositif de démontage (25) étant conçu en forme d'un dispositif de retenue agissant entre le tube de tige (11) et le tube de support (12) et étant soumis à une force de traction lors d'être arrêté par la butée.

2. Dispositif de support pour une broche selon la revendication 1,
**caractérisé en ce que**
le dispositif de retenue présente une barre de retenue (26) étant, avec son extrémité inférieure, fixée au tube de support (12) et étant, avec son extrémité mobile, guidée à travers une butée de guidage (28) agencée au tube de tige (11), la butée de guidage et un dispositif de butée (29) agencé à l'extrémité mobile de la barre de retenue conjointement définissant une butée du dispositif de retenue.

3. Dispositif de support pour une broche selon la revendication 2,
**caractérisé en ce que**
le dispositif de butée (29) est démontable.
